# EUROPÄISCHE PATENTSCHRIFT

(11) **EP 3 433 926 B1**
(45) Veröffentlichungstag und Bekanntmachung des Hinweises auf die Patenterteilung: **25.01.2023**
(21) Anmeldenummer: 17710191.2
(22) Anmeldetag: 08.03.2017
(51) Int. Cl.: H02P 6/182

(54) **VERFAHREN ZUR ROTORPOSITIONSERKENNUNG EINES BLDC MOTORS EINES HUBKOLBENVERDICHTERS, VERDICHTERSTEUERUNG ZUR DURCHFÜHRUNG DES VERFAHRENS UND KÄLTEGERÄT MIT DIESER**
METHOD FOR DETECTING THE ROTOR POSITION OF A BLDC MOTOR OF A RECIPROCATING-PISTON COMPRESSOR, COMPRESSOR CONTROL FOR PERFORMING THE METHOD, AND REFRIGERATION APPLIANCE HAVING SAID COMPRESSOR CONTROL
PROCÉDÉ DE DÉTECTION DE POSITION DE ROTOR D'UN MOTEUR BLDC D'UN COMPRESSEUR À PISTONS ALTERNATIFS, COMMANDE DE COMPRESSEUR POUR L'EXÉCUTION DU PROCÉDÉ ET APPAREIL FRIGORIFIQUE POURVU DE CETTE DERNIÈRE

(30) Priorität: 22.03.2016 DE 102016204674
(43) Veröffentlichungstag der Anmeldung: 30.01.2019
(73) Patentinhaber: BSH Hausgeräte GmbH, 81739 München (DE)
(72) Erfinder: BECKMANN, Tommy, 78591 Durchhausen (DE); KLEIN, Moritz, 89537 Giengen (DE); SPIEGEL, Christoph, 87439 Kempten (DE); PAULDURO, Achim, 89129 Albeck (DE)
(86) Internationale Anmeldenummer: PCT/EP2017/055448
(87) Internationale Veröffentlichungsnummer: WO 2017/162439

(56) Entgegenhaltungen:
- EP-A2- 2 595 306
- DE-A1-102012 006 492
- DE-A1-102012 006 495
- DE-A1-102014 217 006

## Beschreibung

Die vorliegende Erfindung betrifft Verfahren zur Rotorpositionserkennung eines BLDC Motors eines Hubkolbenverdichters, eine Verdichtersteuerung zur Durchführung des Verfahrens und ein Kältegerät, insbesondere ein Haushaltskältegerät, mit dieser Verdichtersteuerung.

Das Verfahren zur Rotorpositionserkennung wendet sich an Anwendungssituationen eines BLDC Motors, in denen eine Last über eine mechanische Umdrehung des Motors ungleichmäßig anliegt. Eine typische derartige Anwendungssituation ist ein Hubkolbenverdichter insbesondere eines Haushaltskältegeräts. Aufgrund der dort vorliegenden rauen Umgebungsbedingungen wird ein separater Positionssensor nicht eingesetzt. Jedoch sind gerade in diesem Gebiet die meisten sensorlosen Positionsbestimmungsverfahren anzutreffen, die in den Wicklungen induzierte Spannungen im sogenannten gegenelektromotorische Kraft Verfahren "Back EMF Verfahren" auswerten.

In einem BLDC Motor sind in einem Rotor permanent-magnetische Pol-Paare angeordnet. In Wicklungen des Stators werden magnetische Pol-Paare elektrisch erzeugt durch eine geeignete gesteuerte Bestromung der Wicklungen. Dies erfolgt häufig mit einem umlaufenden Spannungsvektor mit einer oder mehreren, insbesondere drei, Phasen. Die umlaufenden magnetischen Pol-Paare nehmen die permanent-magnetischen Pol-Paare und damit den Rotor mit. Bei einem Pol-Paar ist eindeutig, welches elektrisch erzeugte magnetische Pol-Paar das einzige permanent-magnetische Pol-Paar mit nimmt. Bei mehr als einem magnetischen Pol-Paar ist jedoch nicht mehr eindeutig, welches der permanent-magnetischen Pol-Paare von welchem elektrisch erzeugten magnetischen Pol-Paar mitgenommen wird. Die mechanische Position des Rotors ist sozusagen elektrisch nicht eindeutig. Diese Kenntnis dieser Information ist jedoch hilfreich sowohl bei laufendem als auch bei stehendem Motor.

Die DE 10 2012 006 492 A1 beschreibt ein Verfahren zur Bestimmung der Position eines Rotors eines laufenden elektrischen Motors, bei der eine Zeitspanne eines zyklischen Signals von mindestens einer Motorphase gemessen und in Beziehung gesetzt wird mit einer auf einen Rotor des elektrischen Motors wirkenden Last. Dieses Verfahren ist jedoch bei einem stehenden Motor nicht anwendbar.

Die DE 10 2012 006495 A1 beschreibt ein Verfahren zum Starten eines BLCD Motors und die DE 10 2014 217006 A1 beschreibt ein Verfahren zum Starten eines BLCD Motors, jeweils basierend auf einer Steuerung mit Kommutierung.

Antriebe mit zyklischer Last wie z.B. Hubkolbenverdichter können teilweise und unter bestimmten Betriebsbedingungen nicht direkt in Betriebsrichtung gestartet werden, da das Lastmoment höher sein kann, als das vom Antriebsmotor wie z.B. ein PMSM oder BLDC Motor erzielbare Drehmoment aus dem Stand heraus aufgebracht werden kann. Bei einigen am Markt erhältlichen Haushaltskältegeräten erfolgt daher eine Vorpositionierung des Rotors vor dem Start, meist im Rahmen einer Startsequenz, damit der Motor gegen eine anliegende Last starten kann.

Die EP 2 595 306 A2 beschreibt ein Verfahren zur Erkennung der Rotorposition eines Permanentmagnet-erregten Synchronmotors eines Hubkolbenverdichters in einem Haushaltsgerät, wobei mittels eines gesteuerten Probelaufs mit rotierendem Spannungsvektor die Rotorposition eines charakteristischen äußeren Lastmoments einem magnetischen Pol-Paar zugeordnet wird.

Es ist eine Aufgabe der vorliegenden Erfindung, eine Rotorposition eines BLDC Motors schon vor dem Start des Motors in Betriebsrichtung auf einfache Art zu erkennen.

Diese Aufgabe wird durch Gegenstände mit den Merkmalen nach den unabhängigen Ansprüchen gelöst. Vorteilhafte Ausgestaltungen der Erfindung sind Gegenstand der abhängigen Ansprüche sowie der Beschreibung, wobei sich unterschiedliche Ausgestaltungen miteinander kombinieren lassen. Vorteilhafte Ausführungsformen der Erfindung sind Gegenstand der Figuren und der zugehörigen Beschreibung.

Die Erfindung wendet sich an einen BLDC Motor eines Hubkolbenverdichters, insbesondere eines Haushaltskältegeräts, bei dem in einem Rotor mehrere permanent-magnetische Pol-Paare angeordnet sind. In Wicklungen des Stators werden magnetische Pol-Paare elektrisch erzeugt durch eine geeignete gesteuerte Bestromung der Wicklungen. Dies erfolgt häufig mit einem umlaufenden Spannungsvektor mit einer oder mehreren, insbesondere drei, Phasen. Die umlaufenden magnetischen Pol-Paare nehmen die mehreren permanent-magnetischen Pol-Paare und damit den Rotor mit. Bei drei magnetischen Pol-Paaren und drei Phasen entsprechen drei Umdrehungen des Spannungsvektors einer mechanischen Umdrehung des Motors. Das Konzept des Spannungsvektors ist in den Figuren erläutert.

Die Erfindung wird im Folgenden meistens am bevorzugten Anwendungsfall mit drei permanent-magnetischen Pol-Paaren und einem umlaufenden Spannungsvektor mit drei Phasen beschrieben.

Das Verfahren ist insbesondere für einen stehenden Motor vorgesehen. Das Back EMF Verfahren kann hier vorteilhaft angewendet werden, wird aber selber nicht beschrieben.

Die Erfindung wendet sich weiterhin an Anwendungssituationen eines BLDC Motors, in denen eine Last über eine mechanische Umdrehung des Motors ungleichmäßig anliegt. Eine typische derartige Anwendungssituation ist ein Verdichter insbesondere eines Haushaltskältegeräts.

In dem erfindungsgemäßen Verfahren zur Rotorpositionserkennung erfolgt in einem ersten Verfahrensschritt a. ein gesteuerter Probelauf zur Erkennung der Rotorposition. Der Motor wird insbesondere aus dem Stand mit einer vorzugsweise geringen Drehgeschwindigkeit gefahren. Die Drehgeschwindigkeit ist vorzugsweise in der Größenordnung von 1 Hz. Der Motor wird dabei als Schrittmotor betrieben.

In einem zweiten Verfahrensschritt b. erfolgt ein Zuordnen der Rotorposition eines charakteristischen äußeren Lastmoments zu einem zugeordneten gesteuerten magnetischen Pol-Paar.

In dem erfindungsgemäßen Verfahren wird der BLDC Motor mit einem Spannungs- oder Stromvektor mit drei Phasen zur Erzeugung der gesteuerten magnetischen Pol-Paare in den Wicklungen gefahren, wobei in Verfahrensschritt a. zu dem Spannungsvektor schrittweise ein Phasenstromwert gemessen wird, aus mehreren gemessenen Phasenstromwerten eine berechnete Phasenstromkurve berechnet wird und eine Abweichung jeweils von gemessenen Phasenstromwerten von einem zugeordneten Wert der berechneten Stromkurve ermittelt wird. Abhängig davon, ob ein fester Stromvektor oder fester Spannungsvektor verwendet wird, werden bei Verwendung eines Stromvektors die Dutycyclewerte, und bei Verwendung eines Spannungsvektors die Phasenstromwerte zur Bewertung der Rotorlage herangezogen. Wobei in der folgenden Beschreibung des Verfahrens nur die Variante mit konstanten Spannungsvektoren und zugehörigen Phasenstromkurven beschrieben werden. Durch Einbeziehung von drei Phasen wird beispielsweise der technische Vorteil erreicht, dass das Verfahren auf einen handelsüblichen Dreiphasen-BLDC Motor anwendbar ist.

Die berechnete Stromkurve liefert Referenzwerte, nämlich Erwartungswerte für weitere, später gemessene Phasenstromwerte. Abweichungen der später gemessenen Phasenstromwerte von den Referenzwerten können beobachtet werden. Bei kleinen Abweichungen liegen die weiteren gemessenen Phasenstromwerte sozusagen im Rahmen der Messgenauigkeit auf der berechneten Kurve und können für eine verbesserte berechnete Stromkurve verwendet werden. Bei großen Abweichungen liegt eine geänderte magnetische Last vor. Eine der mehrere weitere gemessene Phasenstromwerte mit großer Abweichung von der berechneten Kurve bilden eine charakteristische Abweichung eines charakteristischen äußeren Lastmoments ab. Mit der aus gemessenen Phasenstromwerten berechneten Stromkurve wird beispielsweise der technische Vorteil erreicht, dass eine Basis für die Erkennung eines charakteristischen äußeren Lastmoments geschaffen wird.

In dem erfindungsgemäßen Verfahren wird in Verfahrensschritt b. die Rotorposition des charakteristischen äußeren Lastmoments zu dem zugeordneten gesteuerten magnetischen Pol-Paar aufgrund einer charakteristischen Abweichung der Phasenstromwerte zugeordnet. Dadurch wird beispielsweise der technische Vorteil genutzt, dass sich eine charakteristische Abweichung der Phasenstromwerte zu Referenzwerten mit wenig Aufwand ermitteln lässt.

In dem erfindungsgemäßen Verfahren wird in Verfahrensschritt a. der BLDC Motor mit einem konstant rotierenden Spannungsvektor gefahren. Dadurch wird beispielsweise der technische Vorteil erreicht, dass eine Referenz der Phasenstromwerte leicht berechenbar ist.

In einer vorteilhaften Ausgestaltung des Verfahrens wird in Verfahrensschritt a. eine Sinus-förmige Spannungskurve erzeugt. Dadurch wird beispielsweise der technische Vorteil erreicht, dass eine Referenz der Phasenstromwerte leicht berechenbar ist.

In einer vorteilhaften Ausgestaltung des Verfahrens wird in Verfahrensschritt a. der BLDC Motor mit einer konstanten Drehfrequenz angesteuert und diese Drehfrequenz zur Berechnung der berechneten Phasenstromkurve verwendet. Dadurch wird beispielsweise der technische Vorteil erreicht, dass Kenntnisse über die Ansteuerung des Motors leicht zu einer genaueren berechneten Phasenstromkurve genutzt werden.

In einer vorteilhaften Ausgestaltung des Verfahrens wird in Verfahrensschritt a. der BLDC Motor mit einem geringeren Drehmoment als ein maximales äußeres Lastmoment bezogen auf eine Rotorumdrehung gefahren. Dadurch wird beispielsweise der technische Vorteil erreicht, dass der Motor unter Beibehaltung der Zuverlässigkeit schwächer und somit kostengünstiger ausgelegt werden kann.

In einer vorteilhaften Ausgestaltung des Verfahrens wird ein Abriss des Magnetfelds erkannt und bei der Berechnung der berechneten Phasenstromkurve verwendet.

In einer vorteilhaften Ausgestaltung des Verfahrens wird in Verfahrensschritt a. der BLDC Motor in einer Drehrichtung entgegen der gewünschten Startrichtung des Betriebs gefahren. Dadurch wird beispielsweise der technische Vorteil erreicht, dass gleichzeitig mit dem Probelauf eine Vorpositionierung für einen folgenden Betriebs-Start erfolgen kann.

In einer vorteilhaften Ausgestaltung des Verfahrens treibt der BLDC Motor einen Hubkolben eines Verdichters an. Dadurch wird beispielsweise der technische Vorteil einer Anwendung des Verfahrens auf Verdichter mit einer systematischen besonders ausgeprägten ungleichmäßig verteilten Last über eine Motorumdrehung erreicht.

In einer vorteilhaften Ausgestaltung des Verfahrens liegt das charakteristische äußere Lastmoment nahe dem Oberen Totpunkt des Hubkolbens. Dadurch wird beispielsweise der technische Vorteil erreicht, dass die Kenntnis über die Lage des charakteristischen äußeren Lastmoments bei einem Verdichter benutzt wird.

In einer vorteilhaften Ausgestaltung des Verfahrens wird in Verfahrensschritt b. bei dem Zuordnen der Rotorposition des charakteristischen äußeren Lastmoments zu dem zugeordneten gesteuerten magnetischen Pol-Paar die Drehrichtung des Probelaufs berücksichtigt. Dadurch wird beispielsweise der technische Vorteil erreicht, dass in jeder Drehrichtung die Rotorposition des charakteristischen äußeren Lastmoments kurz vor dem Oberen Totpunkt des Hubkolbens liegt und so beide Drehrichtungen für das Verfahren benutzt werden können. Es kann sogar, z. B. einer symmetrischen Lastkurven in Bezug auf den Oberen Totpunkt, von der Rotorposition des charakteristischen bzw. äußeren Lastmoments bei einem Probelauf in einer Richtung auf eine Rotorposition des charakteristischen bzw. äußeren Lastmoments bei einem Betrieb in einer entgegengesetzten Richtung geschlossen werden.

In einer vorteilhaften Ausgestaltung hat das Verfahrens die weiteren Verfahrensschritte c. Fahren des BLDC Motors auf eine Startposition, vorzugsweise abhängig von der Kolbenposition; und d. Starten des BLDC Motors in Betriebsrichtung. Dadurch wird beispielsweise der technische Vorteil erreicht, dass die eindeutige Zuordnung der Rotorposition des charakteristischen äußeren Lastmoments zu einem zugeordneten gesteuerten magnetischen Pol-Paar, über die mehreren elektrischen Umdrehungen des Spannungsvektors, aus dem Stand des Motors heraus in dem Probelauf ermittelt und bei einem folgenden Betriebs-Start benutzt werden können.

Für das Fahren des BLDC Motors auf eine Startposition werden normale Stromverfahren verwendet und durch Versuche optimiert, beispielsweise wenn bestimmte Rotorpositionen vermieden werden sollen. Mit dem Fahren des BLDC Motors auf eine Startposition kann auch eine Optimierung der Anlaufstrecke bzw. des Startweges erfolgen.

Eine erfindungsgemäße Verdichtersteuerung ist ausgestaltet zur Durchführung des Verfahrens. Die Verdichtersteuerung weist vorzugsweise einen Mikroprozessor auf und enthält in einem Speicher ein Programm zur Durchführung des Verfahrens.

Ein erfindungsgemäßes Kältegerät mit einem Verdichter mit BLDC Motor mit mindestens zwei permanent-magnetischen Pol-Paaren und in Wicklungen elektrisch erzeugten gesteuerten magnetischen Pol-Paaren weist eine solche Verdichtersteuerung auf. Gerade in einem solchen Kältegerät, vorzugsweise einem massengefertigten Haushaltskältegerät, ist eine Rotorpositionserkennung eines BLDC Motors und schon vor dem Start des Motors hilfreich. Sie kann einerseits zu einer Vorpositionierung des Motors vor dem Betriebs-Start genutzt werden und kann auch zu einem besseren Hochfahren des Motors genutzt werden.

Vorteile der Erfindung sind hier eine Optimierung der Anlaufstrecke bzw. des Startweges und damit verbunden eine Vermeidung eines Fehlstarts. Ein weiterer Vorteil ist in diesem Zusammenhang eine Vermeidung von einer Geräuschbildung durch Magnetfeldabriss bei einem Fehlstart. Es sei darauf hingewiesen, dass wegen der geringeren Rotationsgeschwindigkeit und wegen der geringeren Bestromung ein Magnetfeldabriss bei der Positionserkennung deutlich weniger Störgeräusche macht als ein Magnetfeldabriss in der Startphase des Motors.

Das Verfahren gemäß der Erfindung und einige oben erläuterte vorteilhafte Ausgestaltungen werden nun an zwei Probelauf-Betriebsarten erläutert.

Der gesteuerte Probelauf erfolgt in einer ersten Probelauf-Betriebsart über eine oder mehr als eine ganze elektrische Umdrehung des Motors. Damit liegt die Dauer der Positionserkennung typischerweise in der Größenordnung von 1 s. Bei einem gesteuerten Probelauf über eine oder mehr als eine ganze mechanische Umdrehung des Motors wird der Motor mit umlaufendem Spannungsvektor schrittweise über die Position der maximalen Last gefahren, ohne dass es zu einem Magnetfeldabriss kommt. Die mechanischen Rotorpositionen der maximalen Last und/oder der Last Null und/oder der minimalen Last sind für jede Drehrichtung bekannt von der Anwendung. Die Position des Spannungsvektors ist der Steuerung zu jedem Zeitpunkt bekannt, unter Berücksichtigung, dass eine Motorumdrehung mehreren Umdrehungen des Spannungsvektors entspricht. Die über eine Motorumdrehung ungleichmäßig verteilte Last führt zu einer Deformierung der Phasenströme zu den Phasen des Spannungsvektors in Bezug auf erwartete Ströme. Diese Deformierung der Phasenströme wird detektiert.

Nun erfolgt eine Zuordnung der Rotorposition der maximalen Last und/oder der Last Null und/oder der minimalen Last zu den entsprechenden Positionen des Spannungsvektors. Diese Zuordnung berücksichtigt die einer mechanischen Umdrehung entsprechenden mehreren elektrischen Umdrehungen. Daraus ergibt sich eindeutig eine Zuordnung der Rotorposition des charakteristischen äußeren Lastmoments zu einem zugeordneten gesteuerten magnetischen Pol-Paar innerhalb der mehreren elektrischen Umdrehungen. Diese eindeutige Zuordnung der mechanischen Rotorposition zu einer Position des Spannungsvektors in einem elektrischen Phasenwinkelbereich über mehrere Umdrehungen ist ein Ergebnis dieser Erfindung.

Diese eindeutige Zuordnung kann während des Betriebs des Motors erhalten bleiben bis die Steuerung oder der Motor stromlos wird oder bis ein Magnetfeld abreißt. Damit steht die eindeutige Zuordnung insbesondere zu Beginn der Startphase zur Verfügung.

Der gesteuerte Probelauf erfolgt in einer zweiten Probelauf-Betriebsart über weniger als eine ganze mechanische Umdrehung des Motors. Damit liegt die Dauer der Positionserkennung typischerweise unter 1 s. In dieser Betriebsart läuft der Spannungsvektor schrittweise um. In einer Position nahe der maximalen Last kommt es zu einem Magnetfeldabriss und der Rotor bleibt stehen während der Spannungsvektor weiter rotiert. Die mechanischen Rotorpositionen der maximalen Last sind für jede Drehrichtung bekannt von der Anwendung. Die Position des Spannungsvektors ist der Steuerung zu jedem Zeitpunkt bekannt, unter Berücksichtigung, dass eine Motorumdrehung mehreren Umdrehungen des Spannungsvektors entspricht. Der Magnetfeldabriss wirkt als in einer charakteristischen Weise ungleichmäßige Last und ist anhand dieses Lastbilds erkennbar. Die über eine Motorumdrehung ungleichmäßig verteilte Last, und als solche wirkt auch zusätzlich der Magnetfeldabriss, führt zu einer Deformierung der Phasenströme zu den Phasen des Spannungsvektors in Bezug auf erwartete Ströme. Diese Deformierung der Phasenströme wird detektiert.

Nun erfolgt eine Zuordnung der Rotorposition der maximalen Last zu der entsprechenden Position des Spannungsvektors bei Magnetfeldabriss, der Magnetfeldabriss wird also der Rotorposition der maximalen Last zugeordnet. Das ist für praktische Anwendungen der Erfindung hinreichend genau. Diese Zuordnung berücksichtigt die einer mechanischen Umdrehung entsprechenden mehreren elektrischen Umdrehungen. Daraus ergibt sich eindeutig eine Zuordnung der Rotorposition des charakteristischen äußeren Lastmoments zu einem zugeordneten gesteuerten magnetischen Pol-Paar, wiederum über die mehreren elektrischen Umdrehungen. Diese eindeutige Zuordnung der mechanischen Rotorposition zu einer Position des Spannungsvektors in einem elektrischen Phasenwinkelbereich über mehrere Umdrehungen ist ein Ergebnis dieser Erfindung.

Da der Steuerung bekannt ist in welcher Drehrichtung und bei welcher Rotorposition der Rotor stehen geblieben ist, kann eine Bestromung der entsprechenden Motor-Wicklungen zusammen mit einer dort beginnenden gesteuerten Drehung des Motors in die entgegengesetzte Drehrichtung der Motor schrittweise gefahren werden unter Beibehaltung der eindeutigen Zuordnung der mechanischen Rotorposition zu einer Position des Spannungsvektors. Diese eindeutige Zuordnung kann während des Betriebs des Motors erhalten bleiben bis die Steuerung oder der Motor stromlos wird oder bis ein Magnetfeld abreißt. Damit steht die eindeutige Zuordnung insbesondere zu Beginn der Startphase zur Verfügung.

Der Spannungsvektor hat in der zweiten Probelauf-Betriebsart beispielsweise 5 % der Maximalspannung. Der Spannungsvektor wird vorteilhaft so ausgelegt, dass der maximal zulässige Strom nicht überschritten wird.

Ausführungsbeispiele der Erfindung sind in den Zeichnungen dargestellt und werden im Folgenden näher beschrieben.

Es zeigt dabei:
- Figur 1:: eine schematische Ansicht eines Kältegerätes gemäß einer Ausführungsform der Erfindung;
- Figur 2:: eine schematische Darstellung eines Kältegeräts mit einem Kältekreislauf und einer Verdichtersteuerung gemäß der Ausführungsform aus Fig. 1;
- Figur 3:: eine schematische Darstellung mehrerer Arbeitszustände eines Hubkolbenverdichters zur Erläuterung einer Ausführungsform der Erfindung;
- Figur 4:: ein Diagramm einer Lastkurve eines Hubkolbenverdichters zur Erläuterung einer Ausführungsform der Erfindung;
- Figur 5:: ein Diagramm mit mehreren Kurven zur Erläuterung des Konzepts des Spannungsvektors an einer Ausführungsform der Erfindung;
- Figur 6:: ein Flussdiagramm des Verfahrens gemäß einer Ausführungsform der Erfindung; und
- Figur 7:: ein Flussdiagramm des Verfahrens gemäß einer weiteren Ausführungsform der Erfindung.

In den Figuren sind zur knappen Darstellung voneinander unabhängige Ausgestaltungen in derselben Ausführungsform realisiert. Identische Bezugszeichen in verschiedenen Figuren bezeichnen gleiche oder gleichwirkende Elemente. Die Ausgestaltungen zeigen einen Kühlschrank mit einem Lagerraum für Kühlgut, Kombinationen mit weiteren Lagerräumen, beispielsweise für Gefriergut, sind von der Erfindung mit umfasst.

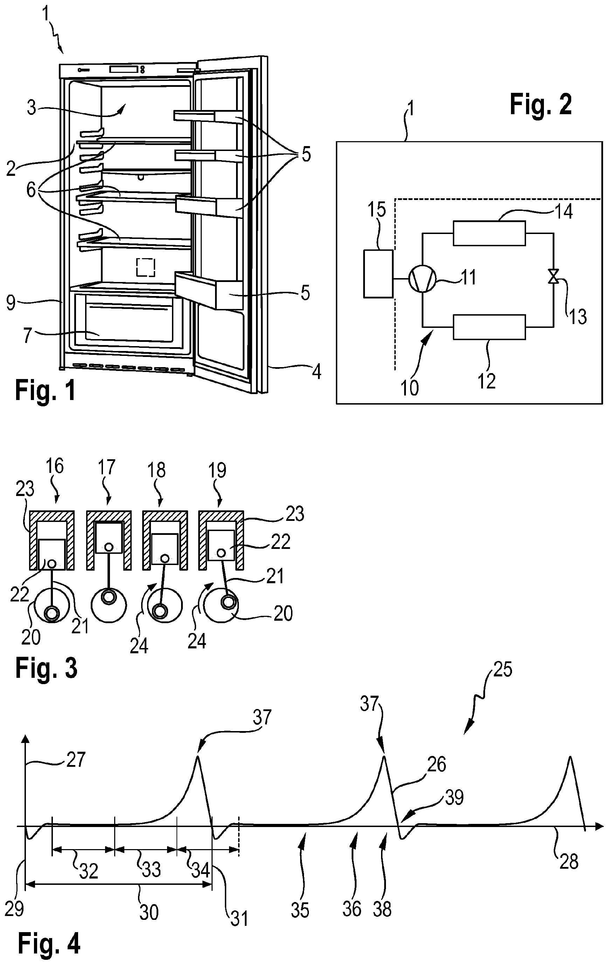

Die Fig. 1 zeigt in einer perspektivischen Darstellung ein Haushaltskältegerät 1, das einen wärmeisolierten Korpus 9 mit einem Innenbehälter 2 umfasst, der einen kühlbaren Innenraum 3 begrenzt. Der kühlbare Innenraum 3 ist zum Lagern von nicht näher dargestellten Lebensmitteln vorgesehen.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

Das Haushaltskältegerät 1 umfasst einen in der Fig. 2 gezeigten Kältemittelkreislauf 10 zum Kühlen des kühlbaren Innenraums 3. Im Falle des vorliegenden Ausführungsbeispiels umfasst der Kältemittelkreislauf 10 des kühlbaren Innenraums 3 einen Verdichter 11, einen dem Verdichter 11 nachgeschalteten Verflüssiger 12, eine dem Verflüssiger 12 nachgeschaltete Drosselvorrichtung 13, die insbesondere als ein Drossel- oder Kapillarrohr ausgeführt ist, und einen Verdampfer 14, der zwischen der Drosselvorrichtung 13 und dem Verdichter 11 angeordnet ist. Der Verdichter 11 ist vorzugsweise innerhalb eines Maschineraums des Haushaltkältegerätes 1 angeordnet, der sich insbesondere hinter der Schublade 7 befindet.

Das Haushaltskältegerät 1 umfasst im Falle des vorliegenden Ausführungsbeispiels eine Verdichtersteuerung 15 zur Steuerung des Verdichters 11. Die Verdichtersteuerung 15 ist ausgestaltet zur Durchführung des erfindungsgemäßen Verfahrens und steuert entsprechend dem Verfahren einen BLDC Motor des Verdichters 11.

Anhand der Fig. 3 bis 5 wird ein gesteuerter Probelauf entsprechend der ersten Probelauf-Betriebsart über eine oder mehr als eine ganze mechanische Umdrehung des Motors erläutert. Die zweite Probelauf-Betriebsart ist dem Fachmann daraufhin klar.

Fig. 3 zeigt mehrere Arbeitszustände 16-19 eines für Haushaltskältegeräte typischen Hubkolbenverdichters zur Erläuterung der Erfindung. Eine Kurbelwelle 20 treibt über einen Pleuel 21 einen Kolben 22 an, der sich in einem Zylinder 23 hin und her bewegt. Arbeitszustand 16 zeigt den Zylinder 23 im Unteren Totpunkt, Arbeitszustand 17 zeigt den Zylinder 23 im Oberen Totpunkt, Arbeitszustand 18 zeigt den Zylinder 23 bei einer angenommenen Drehrichtung 24 kurz nach dem Unteren Totpunkt, und Arbeitszustand 19 zeigt den Zylinder 23 kurz nach dem Oberen Totpunkt.

Fig. 4 zeigt ein Diagramm 25 einer Lastkurve 26 des Hubkolbenverdichters aus Fig. 3, wobei die Last in der Ordinate 27 gegen die Zeit in der Abszisse 28 aufgetragen ist. Lastkurve 26 zeigt den Lastverlauf bei drehender Kurbelwelle 20 über drei mechanische Kurbelwellenumdrehungen. Hier ist wie bei Haushaltskältegeräten üblich die Kurbelwelle 20 starr mit der Drehachse des Motors verbunden. Daher zeigt die Lastkurve 26 die äußere Last des BLDC Motors.

Die Lastkurve 26 beginnt mit Arbeitszustand 17 bei Position 29 des Oberen Totpunkts des Kolbens 22 und zeigt ein Zeitintervall 30 über eine Motorumdrehung bis zum nächsten Oberen Totpunkt bei Position 31.

Unabhängig von der mechanischen Drehung des BLDC Motors sind auch für drei elektrische Umdrehungen die Zeitintervalle 32, 33, 34 eines den Motor steuernden Spannungszeigers eingezeichnet, die zusammen ebenfalls eine mechanische Drehung des BLDC Motors repräsentieren.

Der Verdichter weist ein Einlassventil und ein Auslassventil als Rückschlagventile auf, die ein Einströmen von gasförmigem Kältemittel im Bereich des Unteren Totpunkts und ein Ausströmen im Bereich des Oberen Totpunkts sicherstellen. Damit kann die Lastkurve abschnittsweise verstanden werden. In einem flachen Bereich 35 der Lastkurve 26, in dem der Untere Totpunkt liegt, strömt Gas in den Zylinder 23 ein. In einem ansteigenden Bereich 36 der Lastkurve 26 wird das Gas im Zylinder 23 durch den Kolben 24 verdichtet.

Der Punkt 37 der maximalen Last ist das Öffnen des Auslassventils. Nach dem Öffnen des Auslassventils folgt ein abfallender Bereich 38 der Lastkurve 26, der die Position 29, 39 des Oberen Totpunkts enthält, wobei nach dem Oberen Totpunkt der Kolben durch den Gasdruck beschleunigt wird, was zu einer negativen Last führt.

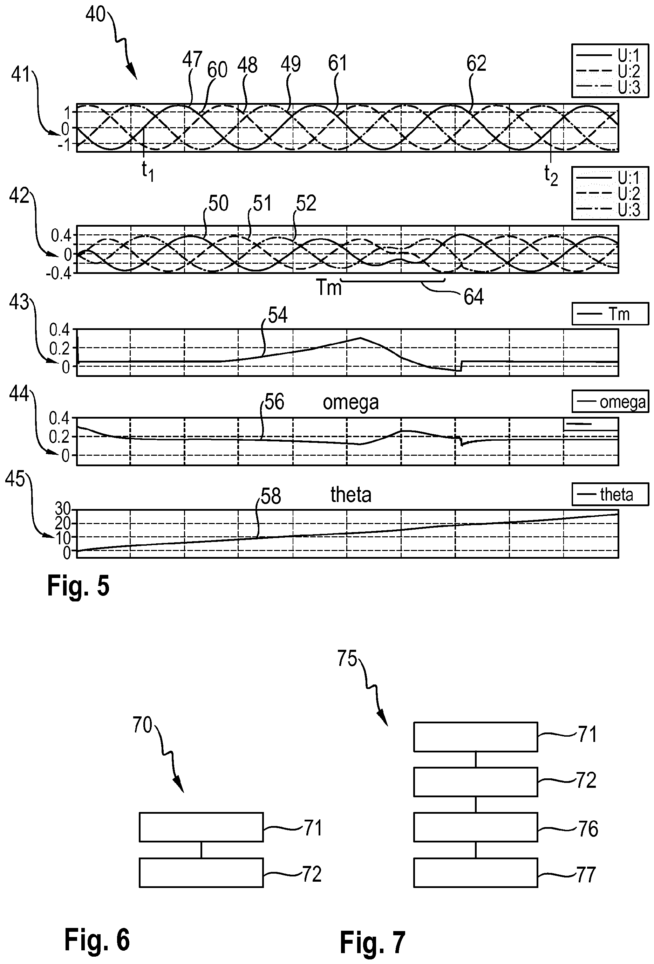

In der Fig. 5 ist ein Diagramm 40 mit mehreren Abschnitten 41-45 mit Kurven dargestellt zur Erläuterung des Konzepts des Spannungsvektors an einer Ausführungsform der Erfindung. Als Beispiel dient ein BLDC Motor eines in Haushaltskältegeräten eingesetzten Verdichters mit drei permanent-magnetischen Pol-Paaren und neun Wicklungen, der mit einer drei-phasigen Wechselspannung angesteuert. Jede Phasenspannung wird dabei gleichzeitig auf drei Wicklungen gegeben. Die Lastkurve des laufenden Verdichters entspricht der Lastkurve 26 aus Fig. 4, daher wird der mechanische Bezug unter Einbeziehung von Figuren 3 und 4 erläutert.

Die Abschnitte 41-45 zeigen simulierte Spannungen, Ströme, ein Drehmoment (Torque), eine Rotorgeschwindigkeit (Omega) und einen Rotorwinkel (Theta) in demselben Zeitintervall. Die Länge des Zeitintervalls ist etwas größer als eine Umdrehung des Rotors. Die Abschnitte 41-45 stellen jeweils auf der Abszisse die Zeitskala und auf der Ordinate die jeweilige Größe zum entsprechenden Abschnitt dar.

Abschnitt 41 zeigt Phasenspannungen 47, 48 und 49 einer auf den BLDC Motor gegebenen Drehstromversorgung. Die Phasenspannungen 47, 48 und 49 sind jeweils um 120° versetzt und bilden einen umlaufenden Spannungsvektor, der auf jedes magnetische Pol-Paar des Rotors wirkt. Dabei wird der an die Wicklungen ausgegebene Spannungsvektor mit Hilfe der Raumzeigermodulation mittels Pulsweitenmodulation erzeugt. Der Spannungsvektor hat konstante Phasenspannungen 47, 48 und 49, die den Motor ohne Magnetfeldabriss über die maximale Last drehen.

Abschnitt 42 zeigt mit den Kurven 50, 51 und 52 Phasenströme jeweils zu den Phasenspannungen 47, 48 und 49.

Abschnitt 43 zeigt mit der Kurve 54 ein elektrisches Drehmoment (Torque) des BLDC Motors.

Abschnitt 44 zeigt mit der Kurve 56 eine Rotorgeschwindigkeit (Omega) des BLDC Motors.

Abschnitte 45 zeigt mit der Kurve 58 einen Rotorwinkel (Theta) des BLDC Motors.

Der erfindungsgemäße gesteuerte Probelauf in der ersten Probelauf-Betriebsart über mehr als eine ganze mechanische Umdrehung des Motors entspricht den Darstellungen in Fig. 3 -5.

Der Ausgangspunkt der Erfindung ist, dass eine Mehrdeutigkeit besteht zwischen der mechanischen Position des Rotors und der elektrischen Lage des Spannungsvektors, da einer mechanischen Umdrehung drei elektrische Umdrehungen des Spannungszeigers entsprechen, zum Beispiel könnten einer mechanischen Umdrehung entsprechend den Zeitabschnitten 32+33+34 in Fig. 4 drei Umdrehungen des Spannungszeigers, etwa drei Sinuswellen 60, 61, 62 der Phasenspannung 47 zwischen den Zeitpunkten t1 und t2 in Fig. 5 entsprechen. Die Mehrdeutigkeit besteht nun darin, dass vor der Anwendung der Erfindung nicht bekannt ist, in welchen der Zeitabschnitte 32, 33, 34 bzw. in welche der Sinuswellen 60, 61, 62 der Punkt 37 der maximalen Last fällt.

Um diese Zuordnung der maximalen Last zu einer bestimmten elektrischen Umdrehung des Spannungszeigers zu treffen wird nun bei dem gesteuerten Probelauf der Motor mit umlaufendem Spannungsvektor mit Phasenspannungen 47, 48, 49 schrittweise über die Position 37 der maximalen Last gefahren, ohne dass es zu einem Magnetfeldabriss kommt. Die mechanische Rotorposition 37 der maximalen Last ist für jede Drehrichtung genau genug bekannt von der Anwendung. Die Position des Spannungsvektors 47 ist der Steuerung zu jedem Zeitpunkt bekannt, unter Berücksichtigung, dass eine Motorumdrehung mehreren Umdrehungen des Spannungsvektors entspricht, also ist der Steuerung bekannt, innerhalb welcher der drei Sinuswellen 60, 61, 62 sich der Spannungsvektor zu jedem Zeitpunkt befindet. Die über eine Motorumdrehung ungleichmäßig verteilte Last in den Bereichen 36 und 38 führt in Zeitabschnitt 64 zu einer Deformierung der Phasenströme 50, 51, 52 zu den Phasenspannungen in Bezug auf erwartete Ströme. Diese Deformierung der Phasenströme und ihre zeitliche Lage bzw. ihre Phasenlage wird detektiert.

Nun erfolgt die Zuordnung der Rotorposition 37 der maximalen Last zu den entsprechenden periodischen Positionen des Spannungsvektors, genauer gesagt zu einer der Sinuswellen 60, 61, 62. Diese Zuordnung berücksichtigt die einer mechanischen Umdrehung entsprechenden mehreren elektrischen Umdrehungen 32, 33, 34, bzw. die Sinuswellen 60, 61, 62. Aus der Lage der Deformation der Phasenströme in Bezug auf erwartete Ströme ergibt sich eindeutig eine Zuordnung der Rotorposition des charakteristischen äußeren Lastmoments 37 zu einem zugeordneten gesteuerten elektrisch erzeugten magnetischen Pol-Paar innerhalb der mehreren elektrischen Umdrehungen, also in welcher der Sinuswellen 60, 61, 62 diese Deformation im wesentlichen liegt, nämlich hier in Sinuswelle 61. Diese Auswertung erfolgt für alle Phasenspannungen 47, 48, 49, so dass man auch die Phase mit der besten Zuordnung ermittelt. Diese eindeutige Zuordnung der mechanischen Rotorposition zu einer Position des Spannungsvektors in einem elektrischen Phasenwinkelbereich über mehrere Umdrehungen ist ein Ergebnis dieser Erfindung.

Dabei wird vorteilhaft ein Vorwissen der aufgegebenen Frequenz des Spannungsvektors benutzt, Z. B. Wenn der Spannungsvektor 1 Hz aufweist wird die interpolierte Kurve auch ungefähr 1 Hz aufweisen.

2 bis 3 Messwerte reichen aus um eine grobe Stromkurve zu definieren. Besser sind mindestens 3 Messwerte. Zu beachten ist, dass sich das ganze innerhalb einer Motorumdrehung abspielt.

Fig. 6 zeigt ein Flussdiagramm 70 des Verfahrens gemäß der Erfindung. Im Verfahren zur Rotorpositionserkennung erfolgt in einem ersten Verfahrensschritt ein gesteuerter Probelauf 71 zur Erkennung der Rotorposition. Der Motor wird als Schrittmotor betrieben und aus dem Stand mit einer Drehgeschwindigkeit von 1 Hz. gefahren.

In einem zweiten Verfahrensschritt erfolgt ein Zuordnen 72 der Rotorposition eines charakteristischen äußeren Lastmoments zu einem zugeordneten gesteuerten magnetischen Pol-Paar.

Damit wird die eindeutige eine Zuordnung der Rotorposition des charakteristischen äußeren Lastmoments zu einem zugeordneten gesteuerten magnetischen Pol-Paar, über die mehreren elektrischen Umdrehungen des Spannungsvektors erreicht, bevor der Motor hochfährt.

Fig. 7 zeigt ein Flussdiagramm 75 des Verfahrens gemäß der Erfindung in einer weiteren Ausführungsform. Im Anschluss an die Verfahrensschritte 71 und 72 aus Flussdiagramm 70 erfolgen nun die weiteren Verfahrensschritte Fahren 76 des BLDC Motors auf eine Startposition, vorzugsweise abhängig von der Kolbenposition; und Starten 77 des BLDC Motors in Betriebsrichtung.

Damit wird die in dem Probelauf ermittelte Zuordnung der mechanischen Position zur elektrischen Position des Spannungsvektors bei einem folgenden Betriebs-Start benutzt.

### Bezugszeichenliste

- 1: Haushaltskältegerät
- 2: Innenbehälter
- 3: kühlbarer Innenraum
- 4: Türblatt
- 5: Türabsteller
- 6: Fachböden
- 7: Schublade
- 9: Korpus
- 10: Kältemittelkreislauf
- 11: Verdichter
- 11: Verflüssiger
- 13: Drosselvorrichtung
- 14: Verdampfer
- 15: Verdichtersteuerung
- 16-19: Arbeitszustände
- 20: Kurbelwelle
- 21: Pleuel
- 22: Kolben
- 23: Zylinder
- 24: Drehrichtung
- 25: Diagramm
- 26: Lastkurve
- 27: Ordinate
- 28: Abszisse
- 29, 31, 39: Position des Oberen Totpunkts
- 30: Zeitintervall
- 32-34: Zeitintervalle
- 35, 36: Bereich
- 37: Punkt der maximalen Last
- 38: Bereich
- 40: Diagramm
- 41-45: Abschnitte
- 47,48,49: Phasenspannungen
- 50, 51, 52: Phasenströme
- 54,56,58: Kurven
- 60,61,62: Sinuswellen
- 64: Zeitabschnitt
- 70, 75: Flussdiagramme
- 71, 72, 76, 77: Verfahrensschritte
- t1, t2: Zeitpunkte

## Patentansprüche

1. Verfahren zur Rotorpositionserkennung eines BLDC Motors eines Hubkolbenverdichters in einem Haushaltkühlgerät mit mindestens zwei permanent-magnetischen Pol-Paaren und in Wicklungen elektrisch erzeugten gesteuerten magnetischen Pol-Paaren mit den Verfahrensschritten
a. Gesteuerter Probelauf (71) zur Erkennung der Rotorposition;
b. Zuordnen (72) der Rotorposition eines charakteristischen äußeren Lastmoments zu einem zugeordneten gesteuerten magnetischen Pol-Paar, wobei
der BLDC Motor mit einem konstant rotierenden Spannungsvektor mit mindestens zwei Phasen (47, 48, 49) zur Erzeugung der gesteuerten magnetischen Pol-Paare in den Wicklungen gefahren wird, und dass in Verfahrensschritt a. (71) zu dem Spannungsvektor schrittweise ein Phasenstromwert gemessen wird, aus mehreren gemessenen Phasenstromwerten eine berechnete Phasenstromkurve berechnet wird und eine Abweichung jeweils von gemessenen Phasenstromwerten von einem zugeordneten Wert der berechneten Stromkurve ermittelt wird, oder
der BLDC Motor mit einem konstant rotierenden Stromvektor mit mindestens zwei Phasen (50, 51, 52) zur Erzeugung der gesteuerten magnetischen Pol-Paare in den Wicklungen gefahren wird, und dass in Verfahrensschritt a. (71) zu dem Stromvektor schrittweise ein Dutycyclewert gespeichert wird, aus mehreren gespeicherten Dutycyclewerten eine berechnete Dutycyclekurve berechnet wird und eine Abweichung jeweils von gemessenen Dutycyclewerten von einem zugeordneten Wert der berechneten Dutycyclekurve ermittelt wird, wobei
in Verfahrensschritt b. (72) die Rotorposition des charakteristischen äußeren Lastmoments zu dem zugeordneten gesteuerten magnetischen Pol-Paar aufgrund einer charakteristischen Abweichung der erfassten Werte zugeordnet wird.

2. Verfahren nach Anspruch 1, **dadurch gekennzeichnet, dass** in Verfahrensschritt a. (71) eine Sinus-förmige Stromkurve erzeugt wird.

3. Verfahren nach einem der vorhergehenden Ansprüche, **dadurch gekennzeichnet, dass** in Verfahrensschritt a. (71) der BLDC Motor mit einer konstanten Drehfrequenz angesteuert wird und diese Drehfrequenz zur Berechnung der berechneten Phasenstromkurve verwendet wird.

4. Verfahren nach einem der vorhergehenden Ansprüche, **dadurch gekennzeichnet, dass** in Verfahrensschritt a. (71) der BLDC Motor mit einem geringeren Drehmoment als ein maximales äußeres Lastmoment bezogen auf eine Rotorumdrehung gefahren wird.

5. Verfahren nach Anspruch 4, **dadurch gekennzeichnet, dass** ein Abriss des Magnetfelds erkannt und bei der Berechnung der berechneten Phasenstromkurve verwendet wird.

6. Verfahren nach einem der vorhergehenden Ansprüche, **dadurch gekennzeichnet, dass** in Verfahrensschritt a. (71) der BLDC Motor in einer Drehrichtung entgegen der gewünschten Startrichtung des Betriebs gefahren wird.

7. Verfahren nach einem der vorhergehenden Ansprüche, **dadurch gekennzeichnet, dass** der BLDC Motor einen Hubkolben (22) eines Verdichters (11) antreibt.

8. Verfahren nach Anspruch 7, **dadurch gekennzeichnet, dass** das charakteristische äußere Lastmoment nahe dem Oberen Totpunkt des Hubkolbens liegt.

9. Verfahren nach Anspruch 8, **dadurch gekennzeichnet, dass** in Verfahrensschritt b. (72) bei dem Zuordnen der Rotorposition des charakteristischen äußeren Lastmoments zu dem zugeordneten gesteuerten magnetischen Pol-Paar die Drehrichtung (24) des Probelaufs berücksichtigt wird.

10. Verfahren nach einem der Ansprüche 1 bis 9, **gekennzeichnet durch** die weiteren Verfahrensschritte
c. Fahren (76) des BLDC Motors auf eine Startposition; und
d. Starten (77) des BLDC Motors in Betriebsrichtung.

11. Verdichtersteuerung (15) ausgestaltet zur Durchführung des Verfahrens nach einem der Ansprüche 1 bis 10.

12. Kältegerät (1) mit einem Verdichter mit BLDC Motor eines Hubkolbenverdichters in einem Haushaltkühlgerät mit mindestens zwei permanent-magnetischen Pol-Paaren und in Wicklungen elektrisch erzeugten gesteuerten magnetischen Pol-Paaren und einer Verdichtersteuerung (15) nach Anspruch 11.

## Claims

1. Method for detecting the rotor position of a BLDC motor of a reciprocating piston compressor in a household appliance with at least two permanent magnetic pole pairs and controlled magnetic pole pairs electrically generated in windings with the method steps
a. Controlled test run (71) for detecting the rotor position;
b. Assign (72) the rotor position of a characteristic external load torque to an assigned controlled magnetic pole pair, wherein the BLDC motor is moved with a constant rotating voltage vector with at least two phases (47, 48, 49) for generating the controlled magnetic pole pairs in the windings, and that in method step a. (71) a phase current value is measured step by step at the voltage vector, a calculated phase current curve is calculated from a plurality of measured phase current values and a deviation from measured phase current values is determined in each case from an assigned value of the calculated current curve, or
the BLDC motor is moved with a constant rotating current vector with at least two phases (50, 51, 52) for generating the controlled magnetic pole pairs in the windings, and that in method step a. (71) a duty cycle value at the current vector is stored step by step, a calculated duty cycle curve is calculated from a plurality of stored duty cycle values and a deviation of measured duty cycle values is determined in each case from an assigned value of the calculated duty cycle curve, wherein
in method step b. (72) the rotor position of the characteristic external load torque is assigned to the assigned controlled magnetic pole pair on the basis of a characteristic deviation of the detected values.

2. Method according to claim 1, **characterised in that**, in method step a. (71) a sinusoidal current curve is generated.

3. Method according to one of the preceding claims, **characterised in that** in method step a. (71) the BLDC motor is controlled with a constant rotational frequency and this rotational frequency is used to calculate the calculated phase current curve.

4. Method according to one of the preceding claims, **characterised in that**, in method step a. (71), the BLDC motor is moved with a lower torque than a maximum external load torque in relation to a rotation of the rotor.

5. Method according to claim 4, **characterised in that** a break in the magnetic field is detected and is used in the calculation of the calculated phase current curve.

6. Method according to one of the preceding claims, **characterised in that** in method step a. (71) the BLDC motor is moved in a direction of rotation counter to the desired start direction of the operation.

7. Method according to one of the preceding claims, **characterised in that** the BLDC motor drives a reciprocating piston (22) of a compressor (11).

8. Method according to claim 7, **characterised in that** the characteristic external load torque lies near the upper dead point of the reciprocating piston.

9. Method according to claim 8, **characterised in that**, in method step b. (72) the direction of rotation (24) of the test run is taken into consideration for the assignment of the rotor position of the characteristic external load torque to the assigned controlled magnetic pole pair.

10. Method according to one of claims 1 to 9, **characterised by** the further method steps
c. Move (76) the BLDC motor to a start position; and
d. Start (77) the BLDC motor in the direction of operation.

11. Compressor controller (15) embodied to carry out the method according to one of claims 1 to 10.

12. Refrigeration appliance (1) with a compressor with BLDC motor of a reciprocating piston compressor in a household refrigeration appliance with at least two permanent magnetic pole pairs and controlled magnetic pole pairs electrically generated in windings and a compressor controller (15) according to claim 11.

## Revendications

1. Procédé de captage de la position du rotor du moteur BLDC d'un compresseur à piston dans un appareil de réfrigération électroménager comprenant au moins deux paires de pôles à aimants permanents et des paires de pôles magnétiques à commande par production d'électricité dans des bobines, comprenant les étapes de procédé suivantes :
a. marche d'essai (71) commandée pour le captage de la position du rotor ;
b. assujettissement (72) de la position du rotor d'un couple résistant extérieur caractéristique à une paire de pôles magnétiques commandée et assujettie, dans lequel
le moteur BLDC est mis en marche avec un vecteur de tension à rotation constante comprenant au moins deux phases (47, 48, 49) pour la production des paires de pôles magnétiques commandées dans les bobines, et en ce qu'à l'étape de procédé a. (71) on mesure une valeur de courant de phase progressivement par rapport au vecteur de tension, on calcule une courbure de courant de phase calculée sur base de plusieurs valeurs de courant de phase mesurées et on détermine une déviation à chaque fois des valeurs de courant de phase mesurées d'une valeur assujettie de la courbe de courant calculée, ou
le moteur BLDC est mis en marche avec un vecteur de courant à rotation constante comprenant au moins deux phases (50, 51, 52) pour la production des paires de pôles magnétiques commandées dans les bobines, et en ce qu'à l'étape de procédé a. (71), une valeur de cycle utile est stockée par étapes par rapport au vecteur de courant, une courbe de cycle utile calculée est calculée sur base de plusieurs valeurs de cycle utile stockées, et une déviation à chaque fois de valeurs de cycle utile mesurées d'une valeur assujettie de la courbe de cycle utile calculée, est déterminée, dans lequel
à l'étape de procédé b. (72), la position du rotor du couple résistant extérieur caractéristique est assujettie à la paire de pôles magnétiques commandée assujettie sur base d'une déviation caractéristique des valeurs détectées.

2. Procédé selon la revendication 1, **caractérisé en ce qu'**à l'étape a. (71) une courbe de courant sinusoïdale est produite.

3. Procédé selon l'une des revendications précédentes, **caractérisé en ce qu'**à l'étape a. (71), le moteur BLDC est amorcé à une fréquence de rotation constante, et cette fréquence de rotation est utilisée au calcul de la courbe de courant de phase calculée.

4. Procédé selon l'une des revendications précédentes, **caractérisé en ce qu'**à l'étape de procédé a. (71), le moteur BLDC est mis en marche à un couple de rotation moindre qu'un couple résistant extérieur maximal sur base de la rotation du rotor.

5. Procédé selon la revendication 4, **caractérisé en ce qu'**une rupture du champ magnétique est reconnue et utilisée lors du calcul de la courbe de courant de phase calculée.

6. Procédé selon l'une des revendications précédentes, **caractérisé en ce qu'**à l'étape de procédé a. (71), le moteur BLDC est mis en marche dans un sens de rotation allant à l'opposé du sens de démarrage souhaité pour le fonctionnement.

7. Procédé selon l'une des revendications précédentes, **caractérisé en ce que** le moteur BLDC entraîne le piston de levée (22) d'un compresseur (11).

8. Procédé selon la revendication 7, **caractérisé en ce que** le couple résistant extérieur caractéristique se situe près du point mort supérieur du piston de levée.

9. Procédé selon la revendication 8, **caractérisé en ce qu'**à l'étape b. (72) l'assujettissement de la position du rotor du couple résistant extérieur caractéristique à la paire de pôles magnétiques commandée assujettie tient compte du sens de rotation (24) de la marche d'essai.

10. Procédé selon l'une des revendications 1 à 9, **caractérisé par** les autres étapes de procédé suivantes :
c. marche (76) du moteur BLDC sur une position de démarrage ; et
d. démarrage (77) du moteur BLDC dans le sens de fonctionnement.

11. Commande de compresseur (15) mise en oeuvre pour l'exécution du procédé selon l'une des revendications 1 à 10.

12. Appareil frigorifique (1) comprenant un compresseur avec un moteur BLDC d'un compresseur à piston dans un appareil de réfrigération électroménager comprenant au moins deux paires de pôles à aimants permanents et des paires de pôles magnétiques à commande par production d'électricité dans des bobines et une commande de compresseur (15) selon la revendication 11.
